# EUROPEAN PATENT APPLICATION

(11) **EP 4 775 045 A1**
(43) Date of publication of application: **15.07.2026**
(21) Application number: 24862600.4
(22) Date of filing: 22.08.2024
(51) Int. Cl.: A23L 19/00, A23B 2/10, A23B 7/00

(54) **METHOD FOR PRODUCING AGED VANILLA BEANS**

(30) Priority: 08.09.2023 JP 2023146311
(71) Applicant: House Foods Corporation, Higashi-Osaka-shi, Osaka 577-8520 (JP); House Foods Group Inc., Higashiosaka-shi, Osaka 577-8520 (JP); House Gaban Corporation, Tokyo 104-0033 (JP)
(72) Inventor: AKASAKA, Yuta, Higashiosaka-shi, Osaka 577-8520 (JP); KANDA, Naoya, Higashiosaka-shi, Osaka 577-8520 (JP); MINAMI, Kanako, Higashiosaka-shi, Osaka 577-8520 (JP); UEYAMA, Masae, Higashiosaka-shi, Osaka 577-8520 (JP); SUMI, Kanako, Higashiosaka-shi, Osaka 577-8520 (JP); SATO, Mariko, Tokyo 104-0033 (JP)
(74) Representative: Global IP Europe Patentanwaltskanzlei
(86) International application number: PCT/JP2024/029810
(87) International publication number: WO 2025/052947

(57) **Abstract**

The present invention provides a method for producing cured vanilla beans in a shorter period than a traditional method including heating in hot water, with less likelihood of mold growth, and cured vanilla beans obtained with the method. One or more embodiments of the present invention relate to a method for producing cured vanilla beans including subjecting vanilla beans to high-pressure processing under conditions of a temperature higher than or equal to 15 °C, a pressure higher than or equal to 10 MPa, and a duration longer than or equal to 5 minutes, and drying, after the high-pressure processing, the vanilla beans subjected to the high-pressure processing.

## Description

### FIELD

The present invention relates to a method for producing cured vanilla beans.

### BACKGROUND

Vanilla is a plant of the orchid family native to Central and South America. Harvested vanilla seedpods (vanilla beans) are processed through curing and then used as a food material for adding sweet aroma or a material for vanilla extract.

Traditional curing of vanilla beans includes heating (boiling) raw vanilla beans for about three minutes in hot water at about 65 °C, wrapping the boiled vanilla beans with blankets to let the vanilla beans steam, and drying the boiled vanilla beans in the sun and in the shade to reduce the moisture content to about 18 to 38% by weight. Vanillin is known as one of the aroma components unique to cured vanilla beans. Glucovanillin contained in raw vanilla beans is hydrolyzed through the activity of β-glucosidase and generates vanillin. In traditional curing, boiling vanilla beans seems to facilitate vanillin generation by, for example, disrupting tissue and creating an environment for β-glucosidase to act easily.

The traditional curing described above normally takes a long period, or about six months. During the long drying period, mold growth or over-drying may cause product loss.

Non-Patent literature 1 describes a method including, instead of heating in hot water, high-pressure processing that uses a high hydrostatic pressure (HHP) to, for example, shorten the period for known curing of vanilla beans including heating with hot water. Non-Patent literature 1 describes, as the conditions for the high-pressure processing, a temperature of 7 °C, a pressure of 50 to 600 MPa, and a processing duration of 5 minutes. Non-Patent Literature 1 describes curing that completes by subjecting raw vanilla beans to the high-pressure processing and then to 20 cycles of a daily cycle of sweating at 45 °C at a relative humidity exceeding 90% and drying under light-exposed conditions at 50 °C at a relative humidity of 60% and 30-day conditioning in a cellophane bag under the conditions of 25 °C and a relative humidity of 50%. Non-Patent Literature 1 indicates that high-pressure processing using the HHP may increase the vanillin yield and shorten the time for curing.

High-pressure processing with the HHP has been used for food processing. For example, Non-Patent Literature 2 describes sterilization of citrus juice through, instead of heat sterilization, high-pressure processing without deteriorating fresh aroma. Non-Patent Literature 3 describes accumulation of γ-aminobutyric acid in brown rice subjected to high-pressure processing and then soaked in water.

### CITATION LIST

### NON-PATENT LITERATURE

Non-Patent Literature 1: Genesis V. Buitimea-Cantua et al., Food Chemistry, 2022, 384, 132497.
Non-Patent Literature 2: Hiroshi Ogawa et al., Nippon Nogeikagaku Kaishi, 1989, 63(6), 1109-1114.
Non-Patent Literature 3: Miwako Kinefuchi et al., Journal of the Japanese Society for Food Science and Technology, 1999, 46(5), 323-328.

### BRIEF SUMMARY

### TECHNICAL PROBLEM

Traditional methods for curing vanilla beans take a long period or involve issues such as mold growth during the curing period.

One or more aspects of the present invention are directed to a method for producing cured vanilla beans in a shorter period than a traditional method, with less likelihood of mold growth, and to cured vanilla beans obtained with the method.

### SOLUTION TO PROBLEM

The inventors have conceived the aspects below to respond to the issues described above.
[1] A method for producing cured vanilla beans, the method comprising:
   subjecting vanilla beans to high-pressure processing under conditions of a temperature higher than or equal to 15 °C, a pressure higher than or equal to 10 MPa, and a duration longer than or equal to 5 minutes; and
   drying, after the high-pressure processing, the vanilla beans subjected to the high-pressure processing.
[2] The method according to [1], wherein
   in the high-pressure processing,
   the temperature is higher than or equal to 30 °C,
   the pressure is higher than or equal to 50 MPa, and
   the duration is longer than or equal to 50 minutes.
[3] The method according to [1] or [2], further comprising:
   storing, before the high-pressure processing, the vanilla beans under conditions of a temperature higher than or equal to 20 °C and a duration longer than or equal to 24 hours.
[4] The method according to [3], wherein
   in the storing, the temperature is higher than or equal to 25 °C.
[5] The method according to any one of [1] to [4], wherein
   the drying includes drying the vanilla beans subjected to the high-pressure processing under a condition of a temperature higher than or equal to 30 °C.
[6] The method according to any one of [1] to [5], wherein
   the drying includes drying the vanilla beans subjected to the high-pressure processing without removing moisture exuding on surfaces of the vanilla beans.
[7] The method according to any one of [1] to [6], wherein
   the drying includes, during the drying, at least one cycle of additionally subjecting the vanilla beans to the high-pressure processing and then returning the vanilla beans to the drying.
[8] The method according to any one of [1] to [7], wherein
   the drying is performed until the vanilla beans have a moisture content of 25 to 45% by weight inclusive.
[9] A fungistatic or sterilization method for vanilla beans, the method comprising:
   subjecting vanilla beans to high-pressure processing under conditions of a temperature higher than or equal to 15 °C, a pressure higher than or equal to 10 MPa, and a duration longer than or equal to 5 minutes; and
   drying, after the high-pressure processing, the vanilla beans subjected to the high-pressure processing.
[10] The method according to [9], wherein
   in the high-pressure processing,
   the temperature is higher than or equal to 30 °C,
   the pressure is higher than or equal to 50 MPa, and
   the duration is longer than or equal to 50 minutes.
[11] The method according to [9] or [10], wherein
   the drying includes, after the high-pressure processing, drying the vanilla beans subjected to the high-pressure processing under a condition of a temperature higher than or equal to 30 °C.
[12] The method according to any one of [9] to [11], wherein
   the drying includes, during the drying, at least one cycle of additionally subjecting the vanilla beans to the high-pressure processing and then returning the vanilla beans to the drying.

The present application claims priority to Japanese Patent Application No. 2023-146311, the contents of which are incorporated herein.

All publications, patents, and patent applications cited herein are incorporated by reference in their entirety.

### ADVANTAGEOUS EFFECTS

The method for producing cured vanilla beans described herein can produce cured vanilla beans in a shorter period than a traditional curing method, with less likelihood of mold growth.

The cured vanilla beans described herein are likely to have a lower fungal load and mold propagation during distribution.

### BRIEF DESCRIPTION OF DRAWINGS

FIG. 1 is a photograph of vanilla beans in test groups 17 to 21 in Experiment 3 immediately before the second cycle of high-pressure processing after 20 days from harvest.
FIG. 2 is a photograph of vanilla beans in test groups 24 to 28 in Experiment 3 immediately before the second cycle of high-pressure processing after 20 days from harvest.
FIG. 3 is a photograph of vanilla beans in test groups 31 to 35 in Experiment 3 immediately before the second cycle of high-pressure processing after 20 days from harvest.
FIG. 4 is a photograph of vanilla beans in test groups 36 to 40 in Experiment 3 immediately before the second cycle of high-pressure processing after 20 days from harvest.
FIG. 5 is a photograph of vanilla beans in test groups 41 to 45 in Experiment 4 immediately before the third cycle of high-pressure processing after 20 days from harvest.
FIG. 6 is a photograph of vanilla beans in test groups 46 to 50 of Experiment 4 immediately before the third cycle of high-pressure processing after 20 days from harvest.
FIG. 7 is a photograph of vanilla beans in test groups 51 to 54 of Experiment 4 immediately before the third cycle of high-pressure processing after 20 days from harvest.
FIG. 8 is a photograph of vanilla beans in a testing category 61 (7 °C, 100 MPa, and 90 minutes) of Experiment 6 after one cycle of high-pressure processing and stored at 40 °C for 12 days in an upper part, and vanilla beans in a testing category 62 (20 °C, 100 MPa, and 90 minutes) after one cycle of high-pressure processing and stored at 40 °C for 12 days in a lower part.
FIG. 9 is a photograph of vanilla beans in a testing category 63 (40 °C, 5MPa, and 90 minutes) of Experiment 6 after one cycle of high-pressure processing and stored at 40 °C for 12 days in an upper part, and vanilla beans in a testing category 64 (40 °C, 30MPa, and 90 minutes) after one cycle of high-pressure processing and stored at 40 °C for 12 days in a lower part.
FIG. 10 is a photograph of vanilla beans in a testing category 65 (40 °C, 100 MPa, and 3 minutes) of Experiment 6 after one cycle of high-pressure processing and stored at 40 °C for 12 days in an upper part, and vanilla beans in a testing category 66 (40 °C, 100 MPa, and 30 minutes) after one cycle of high-pressure processing and stored at 40 °C for 12 days in a lower part.

### DETAILED DESCRIPTION

### 1. Vanilla Beans

Vanilla includes known varieties such as Bourbon species (Vanilla planifolia) and Tahitian species (Vanilla tahitensis). Vanilla herein may be any varieties. Vanilla beans herein are vanilla seedpods.

Curing refers to drying raw vanilla beans while increasing the content of aromatic components such as vanillin. The cured vanilla beans herein refer to dried vanilla beans that have a higher content of aromatic components such as vanillin and are usable as food materials for adding sweet aroma or materials for extracting vanilla extract.

### 2. Method for Producing Cured Vanilla Beans

The method for producing cured vanilla beans described herein includes subjecting vanilla beans to high-pressure processing under conditions of a temperature higher than or equal to 15 °C, a pressure higher than or equal to 10 MPa, and a duration longer than or equal to 5 minutes, and drying, after the high-pressure processing, the vanilla beans subjected to the high-pressure processing.

This method can produce cured vanilla beans in a shorter period than a traditional method including heating in hot water. The cured vanilla beans produced with this method are also suitable for long-term distribution, with molds being sterilized or inactivated.

### 2.1. High-Pressure Processing

An apparatus used for high-pressure processing includes a high-pressure processing apparatus that uses hydrostatic pressure with water used as a pressure transmitting medium. Such an apparatus can adjust temperatures during high-pressure processing by adjusting the temperature of the water.

Vanilla beans subjected to high-pressure processing using the high-pressure processing apparatus are preferably vacuum-packed in a soft and flexible resin bag.

The high-pressure processing at a temperature higher than or equal to 15 °C produces the effects described above. The temperature for the high-pressure processing is preferably higher than or equal to 20 °C, more preferably 25 °C, more preferably 30 °C, more preferably 15 to 60 °C inclusive, more preferably 20 to 50 °C inclusive, more preferably 25 to 50 °C inclusive, or more preferably 30 to 50 °C inclusive.

The high-pressure processing at a pressure higher than or equal to 10 MPa produces the effects described above. The pressure for the high-pressure processing is preferably higher than or equal to 30 MPa, more preferably higher than or equal to 50 MPa, more preferably 10 to 600 MPa inclusive, more preferably 30 to 300 MPa inclusive, or more preferably 50 to 200 MPa inclusive.

The high-pressure processing longer than or equal to 5 minutes produces the effects described above. The duration of the high-pressure processing is preferably longer than or equal to 10 minutes, more preferably longer than or equal to 50 minutes, more preferably longer than or equal to 70 minutes, more preferably 5 to 600 minutes inclusive, more preferably 10 to 450 minutes inclusive, more preferably 50 to 300 minutes inclusive, or more preferably 70 to 200 minutes inclusive.

One cycle of high-pressure processing is not limited to processing of applying a high pressure continuously, and may include at least one pause while applying a high pressure. At least one pause described above does not include subjecting the vanilla beans to other processing such as drying. The duration of the high-pressure processing including at least one pause is a total time except the paused period for processing the vanilla beans at a predetermined temperature and a predetermined pressure.

To shorten the time for completing curing and to produce fungistatic or sterilization effects, the high-pressure processing more preferably includes a temperature higher than or equal to 30 °C, a pressure higher than or equal to 50 MPa, and a duration longer than or equal to 50 minutes. More specifically, the high-pressure processing particularly preferably includes a temperature, a pressure, and a duration within the ranges described above.

### 2.2. Preliminary Storing

The method for producing cured vanilla beans described herein further preferably includes preliminary storing before high-pressure processing. In the preliminary storing, the vanilla beans are stored under conditions of a temperature higher than or equal to 20 °C and a duration longer than or equal to 24 hours.

When high-pressure processing is performed after the preliminary storing, curing is further likely to proceed than when no preliminary storing performed. Thus, cured vanilla beans can be obtained in a further shorter period.

The temperature for the preliminary storing is preferably higher than or equal to 25 °C, more preferably higher than or equal to 30 °C, or still more preferably higher than or equal to 35 °C, and is, for example, 20 to 60 °C inclusive, more preferably 25 to 50 °C inclusive, still more preferably 30 to 50 °C inclusive, or particularly preferably 35 to 50 °C inclusive.

The duration of the preliminary storing is preferably longer than or equal to 48 hours, more preferably longer than or equal to 96 hours, still more preferably 24 hours to 21 days inclusive, still more preferably 48 hours to 14 days inclusive, or particularly preferably 96 hours to 14 days inclusive.

The preliminary storing can be performed by statically holding the raw vanilla beans at the predetermined temperature for the predetermined duration described above. In the preliminary storing, the vanilla beans may be held at the predetermined temperature for the predetermined duration while being under open conditions in an air atmosphere or being hermetically packed in a container such as a flexible bag. The vanilla beans hermetically packed in a container may or may not be vacuum-packed in the container. The preliminary storing preferably starts within 20 days after harvesting the vanilla beans.

### 2.3. Drying

Drying is performed until the vanilla beans preferably have a moisture content of 25 to 45% by weight inclusive, more preferably 30 to 40% by weight inclusive, or particularly preferably 32 to 38% by weight inclusive, to obtain cured vanilla beans.

During the drying, aromatic components including vanillin are generated, and their content increases.

The drying in the method for producing cured vanilla beans described herein includes drying the vanilla beans subjected to high-pressure processing under a condition of a temperature higher than or equal to, for example, 30 °C, or preferably higher than or equal to 35 °C. The temperature is more preferably 30 to 60 °C inclusive, or particularly preferably 35 to 50 °C inclusive.

The drying preferably includes statically holding the vanilla beans after the high-pressure processing under open conditions in an air atmosphere at a predetermined temperature.

The vanilla beans subjected to the high-pressure processing exude moisture on their surfaces. The moisture may include aromatic components or enzymes associated with curing. Drying the moisture provides preferable gloss on the surfaces of cured vanilla beans. The drying thus preferably includes drying the vanilla beans subjected to high-pressure processing without removing moisture exuding on the surfaces.

The duration of the drying is, although not being particularly limited, for example, longer than or equal to 4 days, longer than or equal to 7 days, longer than or equal to 10 days, longer than or equal to 20 days, or longer than or equal to 30 days in total. The duration of the drying is, for example, shorter than or equal to 80 days, preferably shorter than or equal to 70 days, or more preferably shorter than or equal to 60 days. The duration of the drying is, for example, 4 to 80 days inclusive, preferably 7 to 70 days inclusive, more preferably 20 to 60 days inclusive, or particularly preferably 30 to 60 days inclusive.

### 2.4. Additional High-Pressure Processing

The method for producing cured vanilla beans including high-pressure processing and drying described herein may more preferably include, during the drying, at least one cycle of additionally subjecting the vanilla beans to the high-pressure processing and then returning the vanilla beans to the drying.

Performing at least one cycle of additional high-pressure processing during the drying facilitates drying and curing, and is thus preferable.

The number of cycles of additional high-pressure processing is preferably at least one cycle, or more preferably at least two cycles.

Conditions for the additional high-pressure processing can be selected from the same ranges as in the conditions for the initial high-pressure processing, which is ineliminable.

The duration of the drying including at least one cycle of additional high-pressure processing is a total time except pauses resulting from at least one cycle of additional high-pressure processing, and may be within the ranges described above. In the drying, each period between multiple cycles of high-pressure processing is, for example, 12 hours to 10 days inclusive, or preferably 3 to 8 days inclusive.

### 2.5. Other Processing

The method for producing cured vanilla beans described herein may further include other processing such as packing or fungal testing.

For example, packing includes vacuum-packing cured vanilla beans obtained through the high-pressure processing and the drying in a flexible resin bag, or hermetically packing the cured vanilla beans in a container with an atmosphere of, for example, an inert gas such as nitrogen or air including a deoxidizer or a desiccant.

### 3. Fungistatic or Sterilization Method for Vanilla Beans

A fungistatic or sterilization method for vanilla beans described herein includes subjecting vanilla beans to high-pressure processing under conditions of a temperature higher than or equal to 15 °C, a pressure higher than or equal to 10 MPa, and a duration longer than or equal to 5 minutes, and drying, after the high-pressure processing, the vanilla beans subjected to the high-pressure processing.

With this method, vanilla beans suitable for distribution can be obtained with molds being sterilized or inactivated.

A preferred embodiment for high-pressure processing and drying in the fungistatic or sterilization method for vanilla beans described herein is the same as the preferred embodiment for the corresponding processing described for the method for producing cured vanilla beans.

The fungistatic or sterilization method for vanilla beans described herein may preferably include at least one type of processing selected from additional high-pressure processing and preliminary storing. Such processing in the preferred embodiment is the same as the corresponding processing described in a preferred embodiment of the method for producing cured vanilla beans.

### Working Examples

### <Experiment 1>

Harvested raw vanilla beans were vacuum-packed in bags, refrigerated at 4 °C until 15 days after harvest (the fifteenth day from the day of harvest as the zeroth day), and then subjected to the processing below. Three pods of raw vanilla beans were used for respective processing categories. The vanilla beans used in all experiments described herein were vanilla beans of Vanilla planifolia.

Processing 1: After 15 days from harvest, the vanilla beans were frozen.

Processing 2a: After 15 days from harvest, the vanilla beans vacuum-packed and contained in the bag were heated in hot water at 65 °C for 90 seconds. The vanilla beans were frozen immediately after the processing.

Processing 2b: After the same heating as in the processing 2a, the vanilla beans were removed from the bag, placed on a tray, stored, under open conditions, in an air atmosphere at 40 °C for 4 days (until 19 days after harvest), and then frozen.

Processing 2c: After the same heating as in the processing 2a, the vanilla beans packed in the bag were stored at 40 °C for 4 days (until 19 days after harvest), and then frozen.

Processing 3a: After 15 days from harvest, the vanilla beans packed in the bag were subjected to, using a cold isostatic pressing apparatus Sr.CIP-M (Kobe Steel, Ltd.) and water at room temperature (20 °C) as a pressure transmitting medium, high-pressure processing at 50 MPa for 5 minutes. The vanilla beans were frozen immediately after the high-pressure processing.

Processing 3b: After the same high-pressure processing as in the processing 3a, the vanilla beans were removed from the bag, placed on a tray, stored, under open conditions, in an air atmosphere at 40 °C for 4 days (until 19 days after harvest), and then frozen.

Processing 3c: After the same high-pressure processing as in the processing 3a, the vanilla beans packed in the bag were stored at 40 °C for 4 days (until 19 days after harvest), and then frozen.

Processing 4a: After 15 days from harvest, the vanilla beans vacuum-packed in the bag were subjected to, using the apparatus described above and water at room temperature (20 °C) as a pressure transmitting medium, high-pressure processing at 100 MPa for 5 minutes. The vanilla beans were frozen immediately after the high-pressure processing.

Processing 4b: After the same high-pressure processing as in the processing 4a, the vanilla beans were removed from the bag, placed on a tray, stored, under open conditions, in an air atmosphere at 40 °C for 4 days (until 19 days after harvest), and then frozen.

Processing 4c: After the same high-pressure processing as in the processing 4a, the vanilla beans vacuum-packed in the bag were stored at 40 °C for 4 days (until 19 days after harvest), and then frozen.

Processing 5a: After 15 days from harvest, the vanilla beans vacuum-packed in the bag were subjected to, using the apparatus described above and water at 40 °C as a pressure transmitting medium, high-pressure processing at 100 MPa for 90 minutes. The vanilla beans were frozen immediately after the high-pressure processing.

Processing 5b: After the same high-pressure processing as in the processing 5a, the vanilla beans were removed from the bag, placed on a tray, stored, under open conditions, in an air atmosphere at 40 °C for 4 days (until 19 days after harvest), and then frozen.

Processing 5c: After the same high-pressure processing as in the processing 5a, the vanilla beans vacuum-packed in the bag were stored at 40 °C for 4 days (until 19 days after harvest), and then frozen.

Processing 6a: After 15 days from harvest, the vanilla beans vacuum-packed in the bag were subjected to, using the apparatus described above and water at 40 °C as a pressure transmitting medium, five cycles of high-pressure processing at 100 MPa for 450 minutes in total, with each cycle being 90 minutes long. The vanilla beans were frozen immediately after the high-pressure processing.

Processing 6b: After the same high-pressure processing as in the processing 6a, the vanilla beans were removed from the bag, placed on a tray, stored, under open conditions, in an air atmosphere at 40 °C for 4 days (until 19 days after harvest), and then frozen.

Processing 6c: After the same high-pressure processing as in the processing 6a, the vanilla beans vacuum-packed in the bag were stored at 40 °C for 4 days (until 19 days after harvest), and then frozen.

Processing 7a: After 15 days from harvest, the vanilla beans were placed on a tray, stored, under open conditions, in an air atmosphere at 40 °C for 4 days (until 19 days after harvest), and then frozen.

Processing 7b: Starting from the 15th day from harvest, the vanilla beans vacuum-packed in the bag were stored at 40 °C for 4 days (until 19 days after harvest), and then frozen.

The raw vanilla beans (three pods in total) for each processing category were weighed immediately before the start of processing.

In the processing 2b, 3b, 4b, 5b, 6b, and 7a, the vanilla beans (three pods in total) stored at 40 °C under open conditions were weighed before being frozen. The vanilla beans subjected to other processing were packed in the bags and thus presumably had no weight changes.

The frozen vanilla beans (three pods in total) for each processing category were freeze-dried and weighed.

The table below shows the measurement results of weight (total weight of three pods for each processing category).

For the processing categories (3b, 4b, 5b, and 6b) in which the vanilla beans were subjected to high-pressure processing at 50 MPa or 100MPa and then stored under open conditions at 40 °C for 4 days, the weight of the vanilla beans decreased. The degree of weight loss for the vanilla beans in the processing categories described above was greater than that for the processing category (2b) in which the vanilla beans were heated in hot water, or known curing, and then stored at 40 °C for 4 days. This suggests that the high-pressure processing facilitates curing of the vanilla beans than processing of heating in hot water.

**[Table 1]**

| No. | Processing | Raw weight before processing (g) | Weight after storing under open conditions at 40 °C (g) | Weight after freeze-drying (g) |
|---|---|---|---|---|
| 1 | Freezing | 62.45 | | 7.73 |
| 2a | Heating in hot water | 63.25 | | 8.13 |
| 2b | Heating in hot water + Storing under open conditions at 40 °C | 63.59 | 45.35 | 6.99 |
| 2c | Heating in hot water + Storing under closed conditions at 40 °C | 63.46 | | 7.12 |
| 3a | High-pressure processing (50 MPa, room temperature, and 5 min.) | 62.41 | | 7.83 |
| 3b | High-pressure processing (50 MPa, room temperature, and 5 min.) + Storing under open conditions at 40 °C | 62.36 | 42.56 | 7.25 |
| 3c | High-pressure processing (50 MPa, room temperature, and 5 min.) + Storing under closed conditions at 40 °C | 63.25 | | 7.08 |
| 4a | High-pressure processing (100 MPa, room temperature, and 5 min.) | 63.94 | | 8.09 |
| 4b | High-pressure processing (100 MPa, room temperature, | 62.44 | 42.41 | 7.38 |
| | and 5 min.) + Storing under open conditions at 40 °C | | | |
| 4c | High-pressure processing (100 MPa, room temperature, and 5 min.) + Storing under closed conditions at 40 °C | 64.33 | | 7.44 |
| 5a | High-pressure processing (100 MPa, 40 °C, 90 min.) | 61.98 | | 7.47 |
| 5b | High-pressure processing (100 MPa, 40 °C, 90 min.) + Storing under open conditions at 40 °C | 62.74 | 43.04 | 7.33 |
| 5c | High-pressure processing (100 MPa, 40 °C, and 90 min.) + Storing under closed conditions at 40 °C | 62.04 | | 7.52 |
| 6a | High-pressure processing (100 MPa, 40 °C, and 90 min. × 5) | 64.13 | | 7.62 |
| 6b | High-pressure processing (100 MPa, 40 °C, and 90 min. × 5) + Storing under open conditions at 40 °C | 60.72 | 34.82 | 8.37 |
| 6c | High-pressure processing (100 MPa, 40 °C, and 90 min. × 5) + Storing under closed conditions at 40 °C | 63.89 | | 7.33 |
| 7a | Storing under open conditions at 40 °C | 63.43 | 45.09 | 7.39 |
| 7b | Storing under closed conditions at 40 °C | 64.05 | | 7.22 |

### <Experiment 2>

Harvested raw vanilla beans were vacuum-packed in bags, refrigerated at 4 °C until 16 days after harvest (the sixteenth day from the day of harvest as the zeroth day), and then subjected to the processing below.

### (First Cycle of High-Pressure Processing)

After 16 days from harvest, the vanilla beans vacuum-packed in the bags (3 pods/bag) were subjected to, using the apparatus described above in Experiment 1 and water at 40 °C as a pressure transmitting medium, high-pressure processing at 100 MPa for 90 minutes.

### (Drying Phase 1)

After the first cycle of high-pressure processing, the vanilla beans were removed from the bags, placed on trays, and stored, under open conditions, in an air atmosphere at 40 °C for 4 days (until 20 days after harvest).

### (Second Cycle of High-Pressure Processing)

The vanilla beans after the drying phase 1 were vacuum-packed in bags and subjected to high-pressure processing at 100 MPa, 40 °C, and for 90 minutes that is the same as the first cycle of high-pressure processing.

### (Drying Phase 2)

After the second cycle of high-pressure processing, the vanilla beans were removed from the bags, placed on trays, and stored, under open conditions, in an air atmosphere at 40 °C for 4 days (until 24 days after harvest).

### (Third Cycle of High-Pressure Processing)

The vanilla beans after the drying phase 2 were vacuum-packed in bags and subjected to high-pressure processing at 100 MPa, 40 °C, and for 90 minutes that is the same as the first cycle of high-pressure processing.

### (Drying Phase 3)

After the third cycle of high-pressure processing, the vanilla beans were removed from the bags, placed on trays, and stored, under open conditions, in an air atmosphere at 40 °C for 4 days (until 28 days after harvest).

### (Fourth Cycle of High-Pressure Processing)

The vanilla beans after the drying phase 3 were vacuum-packed in bags and subjected to high-pressure processing at 100 MPa, 40 °C, and for 90 minutes that is the same as the first cycle of high-pressure processing.

### (Drying Phase 4)

After the fourth cycle of high-pressure processing, the vanilla beans were removed from the bags, placed on trays, and stored, under open conditions, in an air atmosphere at room temperature (20 °C) for 4 days (until 32 days after harvest).

### (Fifth Cycle of High-Pressure Processing)

The vanilla beans after the drying phase 4 were vacuum-packed in bags and subjected to high-pressure processing at 100 MPa, 40 °C, and for 90 minutes that is the same as the first cycle of high-pressure processing.

### (Drying Phase 5)

After the fifth cycle of high-pressure processing, the vanilla beans were removed from the bags, placed on trays, and stored, under open conditions, in an air atmosphere at room temperature (20 °C) for 4 days (until 36 days after harvest).

The vanilla beans from six test plots (3 pods/plot) were processed under the same conditions.

The vanilla beans (three pods in total) were weighed immediately before the first, second, third, and fourth high-pressure processing and at the end of the drying phase 5 (36 days after harvest).

The table below shows the weight measurement results for test plots 1 to 6.

**[Table 2]**

| | First cycle of high-pressure processing | Second cycle of high-pressure processing | Third cycle of high-pressure processing | Fourth cycle of high-pressure processing | End of drying |
|---|---|---|---|---|---|
| Days after harvest | 16 | 20 | 24 | 28 | 36 |
| Test plot 1 | 58.69 | 38.69 | 22.57 | 12.71 | 10.47 |
| Test plot 2 | 59.14 | 41.22 | 27.46 | 16.15 | 11.40 |
| Test plot 3 | 56.65 | 41.45 | 28.02 | 16.11 | 11.35 |
| Test plot 4 | 57.00 | 38.16 | 20.53 | 11.16 | 8.34 |
| Test plot 5 | 53.97 | 36.93 | 21.43 | 10.27 | 6.73 |
| Test plot 6 | 52.24 | 36.30 | 22.47 | 11.62 | 8.19 |

Raw vanilla beans have a moisture content of about 90% by weight, whereas cured vanilla beans normally have a moisture content of about 35% by weight. The table below shows the moisture content at each of the time points described above, with the moisture content of raw vanilla beans immediately before the first cycle of high-pressure processing being 90% by weight.

**[Table 3]**

| | First cycle of high-pressure processing | Second cycle of high-pressure processing | Third cycle of high-pressure processing | Fourth cycle of high-pressure processing | End of drying |
|---|---|---|---|---|---|
| Days after harvest | 16 | 20 | 24 | 28 | 36 |
| Test plot 1 | 90% | 85% | 74% | 54% | 44% |
| Test plot 2 | 90% | 86% | 78% | 63% | 48% |
| Test plot 3 | 90% | 86% | 80% | 65% | 50% |
| Test plot 4 | 90% | 85% | 72% | 49% | 32% |
| Test plot 5 | 90% | 85% | 75% | 47% | 20% |
| Test plot 6 | 90% | 86% | 77% | 55% | 36% |

As shown in the table above, drying was facilitated by subjecting the vanilla beans after high-pressure processing to at least one cycle of additional high-pressure processing during drying and storing at 40 °C under open conditions. After 36 days from harvest (19 days from the first cycle of high-pressure processing), the moisture content decreased to about 35% by weight, which corresponds to the moisture content of cured vanilla beans. This indicates that the combination of high-pressure processing and drying can produce cured vanilla beans in a shorter period.

### <Experiment 3>

This experiment was performed to investigate the effects of the temperature (4, 20, 30, or 40 °C) for storing before the high-pressure processing, the duration (90 or 10 minutes) of high-pressure processing (100 MPa and 40 °C), the number of times the high-pressure processing was performed (once or twice), on curing of vanilla beans.

In this experiment, three pods of vanilla beans that are 15 to 17 cm long were used per group.

In this experiment and Experiment 4 described below, the day on which vanilla beans were harvested is referred to as D0 (zeroth day), the day after D0 (next day) is referred to as D1, and two days after D0 is sequentially referred to as D2, sequentially. A week (7 days) after D0 is referred to as W1, and two weeks (14 days) after D0 is referred to as W2.

The experiment is described below with reference to the table below.

For all test groups (test groups 17 to 21, 24 to 28, and 31 to 40, refer to the table below), raw vanilla beans harvested on D0 were stored in an air atmosphere under open conditions on a tray until the initial processing on D13. The temperatures for storing in this period were set as below.

The test groups 17 to 21 were stored at 20 °C from D0 to D1 and at 4 °C from D2 to D13.

The test groups 24 to 28 were stored at 20 °C from D0 to D1 and at 30 °C from D2 to D13.

The test groups 31 to 35 were stored at 20 °C from D0 to D1 and at 40 °C from D2 to D13.

The test groups 36 to 40 were stored at 20 °C from D0 to D1 and at 20 °C from D2 to D13.

The processing below was performed on D13.

Boiling (test groups 17, 24, 31, and 36): The vanilla beans were vacuum-packed in a bag and heated in hot water at 65 °C for 90 seconds.

High pressure 11 (test groups 18, 19, 25, 26, 32, 33, 37, and 38): The vanilla beans were vacuum-packed in a bag and subjected to, using the apparatus described above in Experiment 1 and water at 40 °C as a pressure transmitting medium, high-pressure processing at 100 MPa for 90 minutes.

High pressure 12 (test groups 20, 21, 27, 28, 34, 35, 39, and 40): The vanilla beans were vacuum-packed in a bag and subjected to, using the apparatus described above in Experiment 1 and water at 40 °C as a pressure transmitting medium, high-pressure processing at 100 MPa for 10 minutes.

The vanilla bean samples subjected to the processing of boiling, high pressure 11, or high pressure 12 on D13 were removed from the bag, placed on a tray, and stored, under open conditions, in an air atmosphere at 40 °C until D20. The vanilla bean samples subjected to the high-pressure processing of high pressure 11 or high pressure 12 on D13 were stored and dried at 40 °C until D20, without wiping off moisture exuding on the surfaces of the samples.

The processing below was performed on D20. The high pressure 11 and high pressure 12 were performed under the same processing conditions as in the processing performed on D13.

Freezing (test groups 17, 18, 20, 24, 25, 27, 31, 32, 34, 36, 37, and 39): The vanilla beans were vacuum-packed and frozen in a bag and kept frozen.
High pressure 11 (test groups 19, 26, 33, and 38)
High pressure 12 (test groups 21, 28, 35, and 40)

The vanilla bean samples subjected to the high-pressure processing of high pressure 11 or high pressure 12 on D20 were removed from the bag, placed on a tray, and stored, under open conditions, in an air atmosphere at 40 °C until D27. The vanilla bean samples after the high-pressure processing on D20 were stored and dried at 40 °C until D27, without wiping off moisture exuding on the surfaces of the samples.

The samples stored until D27 were frozen on D27, and kept frozen.

The vanilla beans (three pods in total) in the respective test groups were weighed on D2, D13 (immediately after the processing performed on D13), D20 (immediately after the processing performed on D20), and D24 (while being stored at 40 °C).

The frozen vanilla beans in some test groups were subjected to freeze-drying (FD). The vanilla beans (three pods in total) after FD were weighed.

The table below shows the conditions and the weight measurement results for the test groups 17 to 21, 24 to 28, and 31 to 40.

**[Table 4]**

| No. | D2 weight (g) | Weight after FD (g) | D0-D1 storing | D2-D13 storing | D13 processing | | D13-D20 storing | D20 processing | | D20-D27 storing | D24 weight (g) | D27 processing |
|---|---|---|---|---|---|---|---|---|---|---|---|---|
| | | | | | Conditions | Weight (g) | | Conditions | Weight (g) | | | Conditions |
| 17 | 33.58 | | 20 °C | 4 °C | **Boiling** | 33.37 | 40 °C | Freezing | 25.11 | | | |
| 18 | 28.60 | | 20 °C | 4 °C | **High pressure 11** | 28.58 | 40 °C | Freezing | 21.93 | | | |
| 19 | 34.50 | 5.51 | 20 °C | 4 °C | **High pressure 11** | 34.58 | 40 °C | **High pressure 11** | 26.38 | 40 °C | 21.68 | Freezing |
| 20 | 29.39 | | 20 °C | 4 °C | **High pressure 12** | 29.30 | 40 °C | Freezing | 22.16 | | | |
| 21 | 29.58 | 4.91 | 20 °C | 4 °C | **High pressure 12** | 29.53 | 40 °C | **High pressure 12** | 23.30 | 40 °C | 19.81 | Freezing |
| 24 | 30.67 | | 20 °C | 30 °C | **Boiling** | 29.63 | 40 °C | Freezing | 18.73 | | | |
| 25 | 34.53 | | 20 °C | 30 °C | **High pressure 11** | 32.83 | 40 °C | Freezing | 22.29 | | | |
| 26 | 34.25 | 4.83 | 20 °C | 30 °C | **High pressure 11** | 33.16 | 40 °C | **High pressure 11** | 24.67 | 40 °C | 20.52 | Freezing |
| 27 | 31.16 | | 20 °C | 30 °C | **High pressure 12** | 30.37 | 40 °C | Freezing | 24.07 | | | |
| 28 | 36.50 | 5.26 | 20 °C | 30 °C | **High pressure 12** | 35.44 | 40 °C | **High pressure 12** | 26.28 | 40 °C | 21.85 | Freezing |
| 31 | 30.39 | | 20 °C | 40 °C | **Boiling** | 25.81 | 40 °C | Freezing | 18.40 | | | |
| 32 | 33.83 | | 20 °C | 40 °C | **High pressure 11** | 25.54 | 40 °C | Freezing | 18.75 | | | |
| 33 | 26.85 | 3.76 | 20 °C | 40 °C | **High pressure 11** | 24.30 | 40 °C | **High pressure 11** | 18.81 | 40 °C | 15.44 | Freezing |
| 34 | 28.79 | | 20 °C | 40 °C | **High pressure 12** | 24.29 | 40 °C | Freezing | 18.14 | | | |
| 35 | 27.32 | 4.03 | 20 °C | 40 °C | **High pressure 12** | 22.81 | 40 °C | **High pressure 12** | 16.41 | 40 °C | 13.09 | Freezing |
| 36 | 30.56 | | 20 °C | 20 °C | **Boiling** | 30.52 | 40 °C | Freezing | 23.59 | | | |
| 37 | 33.04 | | 20 °C | 20 °C | **High pressure 11** | 33.07 | 40 °C | Freezing | 24.92 | | | |
| 38 | 34.95 | 5.61 | 20 °C | 20 °C | **High pressure 11** | 35.93 | 40 °C | **High pressure 11** | 28.65 | 40 °C | 24.54 | Freezing |
| 39 | 33.11 | | 20 °C | 20 °C | **High pressure 12** | 33.09 | 40 °C | Freezing | 25.51 | | | |
| 40 | 30.55 | 4.83 | 20 °C | 20 °C | **High pressure 12** | 29.76 | 40 °C | **High pressure 12** | 21.81 | 40 °C | 17.69 | Freezing |

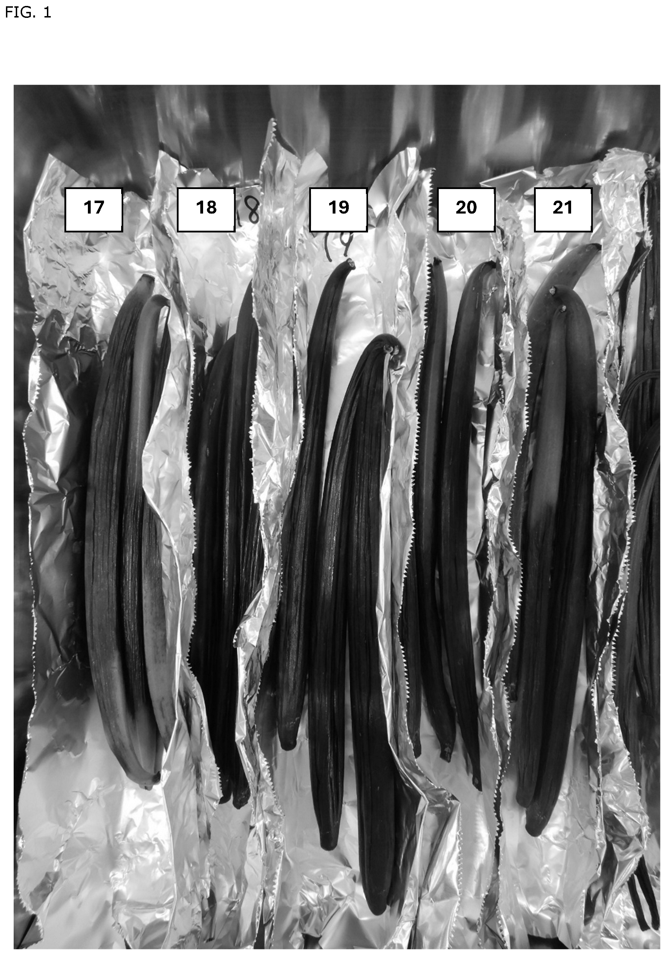

FIG. 1 is a photograph of the vanilla beans in the test groups 17 to 21 immediately before the processing on D20. The samples in the test groups 18 to 21 subjected to the high-pressure processing were darker and more cured than the samples in the test group 17 subjected to the boiling. The samples in the test groups 18 and 19 subjected to the high-pressure processing of high pressure 11 (40 °C, 100 MPa, and 90 minutes) had almost no green portions and were still more cured than partially green samples in the test groups 20 and 21 subjected to the high-pressure processing of high pressure 12 (40 °C, 100 MPa, and 10 minutes).

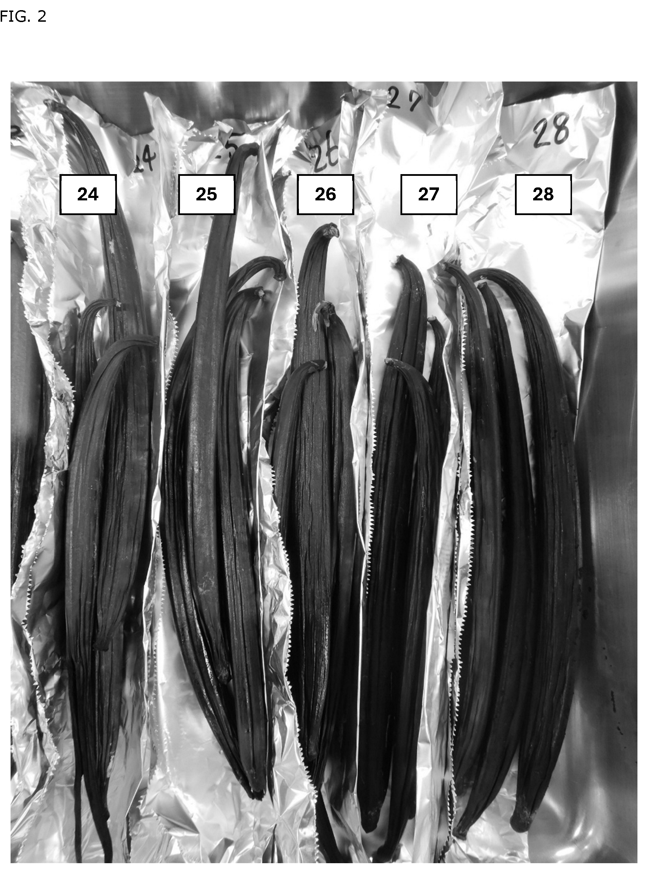

FIG. 2 is a photograph of the vanilla beans in the test groups 24 to 28 immediately before the processing on D20. The test groups 24 to 28 (FIG. 2) including samples stored at 30 °C before the processing on D13 differ from the test groups 17 to 21 (FIG. 1) stored at 4 °C in the same period. Unlike the samples in the test groups 17, 20, and 21, the samples in the test groups 24, 27, and 28 have no green portions. The samples in the test groups 25 and 26 are still darker than the samples in the test groups 18 and 19. These results indicate that storing the samples at 30 °C before high-pressure processing facilitated curing of the vanilla beans.

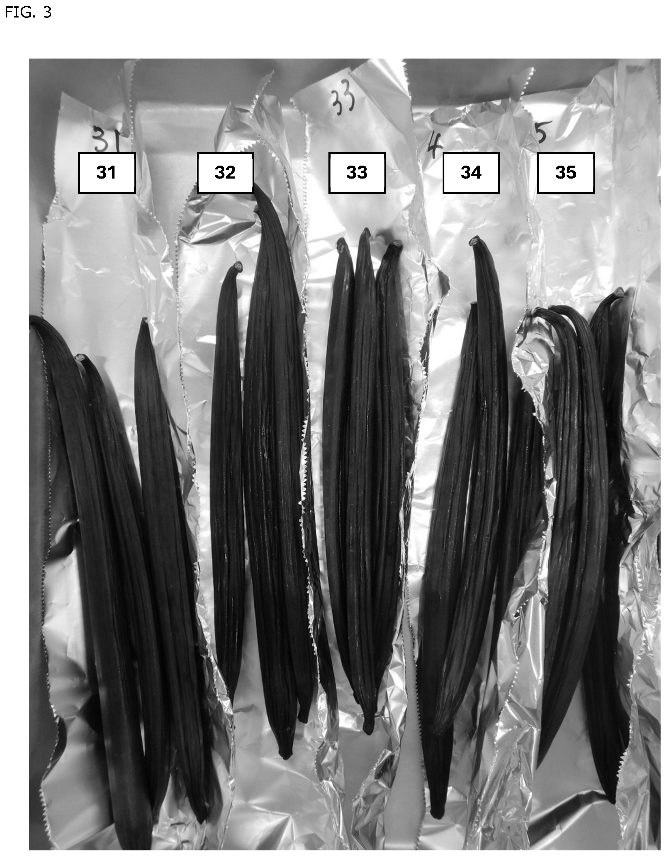

FIG. 3 is a photograph of the vanilla beans in the test groups 31 to 35 immediately before the processing on D20. The test groups 31 to 35 (FIG. 3) including samples stored at 40 °C before the processing on D13 differ from the test groups 17 to 21 (FIG. 1) stored at 4 °C and the test groups 24 to 28 (FIG. 2) stored at 30 °C in the same period. The samples in the test groups 31 to 35 (FIG. 3) were still darker than the corresponding samples in the test groups 24 to 28 (FIG. 2). This indicates that storing the samples at 40 °C before high-pressure processing facilitated curing of the vanilla beans compared with storing the samples at 30 °C.

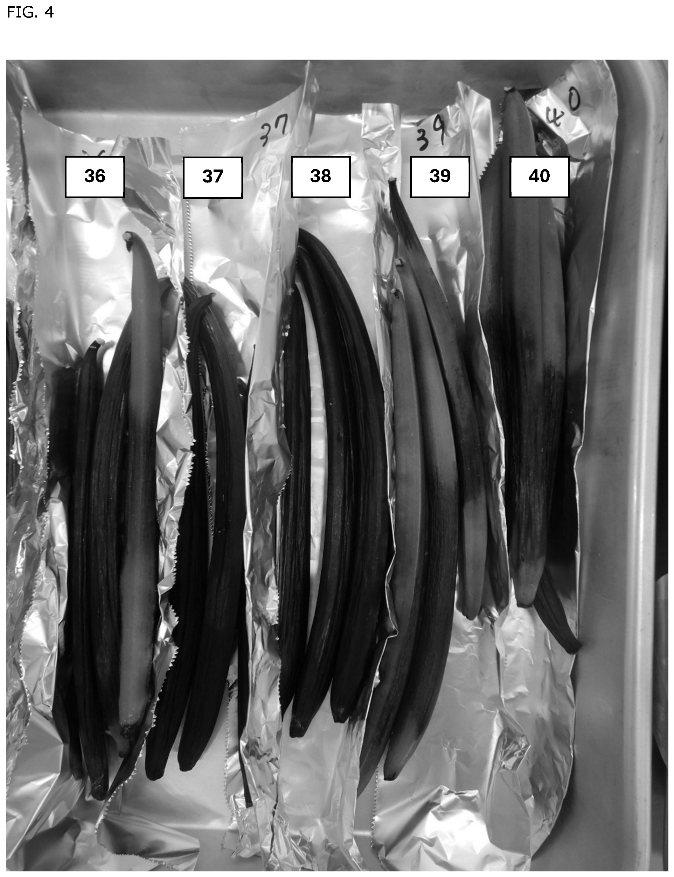

FIG. 4 is a photograph of the vanilla beans in the test groups 36 to 40 immediately before the processing on D20. The test groups 36 to 40 (FIG. 4) including samples stored at 20 °C before the processing on D13 differ from the test groups 17 to 21 (FIG. 1) stored at 4 °C in the same period. The samples in the test groups 36 to 40 (FIG. 4) were darker than the corresponding samples in the test groups 17 to 21 (FIG. 1). Thus, curing was facilitated.

### <Experiment 4>

This experiment was performed to investigate the effects of the temperature (20 or 40 °C) for storing before high-pressure processing, the duration (90 or 10 minutes) of the high-pressure processing (100 MPa and 40 °C), the conditions for storing at 40 °C during the periods between multiple cycles of high-pressure processing (with or without removing exuding moisture and being or not being hermetically packed) on curing of vanilla beans.

The test groups 42 and 44 to 54 in this experiment each include three pods of vanilla beans that are 18 to 22 cm long. The test groups 41 and 43 each include three pods of vanilla beans that are 15 to 17 cm long.

The experiment is described below with reference to the table below.

For all test groups, raw vanilla beans harvested on D0 were stored on a tray under open conditions in an air atmosphere until before the initial cycle of processing performed on D6. The temperatures for storing in this period were set as below.

The test groups 41 to 48 were stored at 20 °C from D0 to D6.

The test groups 49 to 54 were stored at 20 °C from D0 to D1 and at 40 °C from D2 to D6.

The processing below was performed on D6.

High pressure 21 (test groups 41, 42, and 49): The vanilla beans were vacuum-packed in a bag and subjected to, using the apparatus described above in Experiment 1 and water at 40 °C as a pressure transmitting medium, high-pressure processing at 100 MPa for 90 minutes. After the high-pressure processing, the vanilla beans were removed from the bag, placed on a tray without removing moisture exuding on the surfaces, and then stored under open conditions.

High pressure 22 (test groups 43, 44, and 50): The vanilla beans were vacuum-packed in a bag and subjected to high-pressure processing at 40 °C, 100 MPa, and for 90 minutes that is the same as the processing of high pressure 21. After the high-pressure processing, the vanilla beans were removed from the bag, placed on a tray after removing moisture exuding on the surfaces by wiping, and then stored under open conditions.

High pressure 23 (test groups 45 and 51): The vanilla beans were vacuum-packed in a bag and subjected to high-pressure processing at 40 °C, 100 MPa, and for 90 minutes that is the same as the processing of high pressure 21. After the high-pressure processing, the vanilla beans packed in the bag were placed on a tray and stored.

High pressure 24 (test groups 46 and 52): The vanilla beans were vacuum-packed in a bag and subjected to, using the apparatus described above in Experiment 1 and water at 40 °C as a pressure transmitting medium, high-pressure processing at 100 MPa for 10 minutes. After the high-pressure processing, the vanilla beans were removed from the bag, placed on a tray without removing moisture exuding on the surfaces, and then stored under open conditions.

High pressure 25 (test groups 47 and 53): The vanilla beans were vacuum-packed in a bag and subjected to high-pressure processing at 40 °C, 100 MPa, and for 10 minutes that is the same as the processing of high pressure 24. After the high-pressure processing, the vanilla beans were removed from the bag, placed on a tray after removing moisture exuding on the surfaces by wiping, and then stored under open conditions.

High pressure 26 (test groups 48 and 54): The vanilla beans were vacuum-packed in a bag and subjected to high-pressure processing at 40 °C, 100 MPa, and for 10 minutes that is the same as the processing of high pressure 24. After the high-pressure processing, the packed vanilla beans were placed on a tray and stored.

The samples after the first cycle of high-pressure processing on D6 were stored at 40 °C from D6 to D13. Conditions for storing the samples were the same as the conditions described in high pressures 21 to 26.

On D13, the samples were subjected to the second cycle of high-pressure processing under the same conditions as in the first cycle of high-pressure processing.

The samples after the second cycle of high-pressure processing on D13 were stored at 40 °C from D13 to D20. Conditions for storing the samples were the same as the conditions described in high pressures 21 to 26.

On D20, the samples were subjected to the third cycle of high-pressure processing using the same conditions as in the first cycle of high-pressure processing.

The samples after the third cycle of high-pressure processing on D20 were stored at 40 °C from D20 to D27. Conditions for storing the samples were the same as the conditions described in High pressures 21 to 26.

On D27, the samples in the test groups 41 to 51 were subjected to the fourth cycle of high-pressure processing using the same conditions as in the first cycle of high-pressure processing. The samples in the test groups 52 to 54 were frozen on D27 and kept frozen.

The samples after the fourth cycle of high-pressure processing on D27 were stored at 40 °C from D27 to W8 (D56). Conditions for storing the samples were the same as the conditions described in high pressures 21 to 26.

The samples in the test groups 41 to 51 were frozen on W8 and kept frozen.

The vanilla beans (three pods in total) in the respective test groups were weighed on D2, D6 (immediately after the processing performed on D6), D13 (immediately after the processing performed on D13), D20 (immediately after the processing performed on D20), D27 (immediately after the processing performed on D27), and W5 (D35, while being stored at 40 °C).

The table below shows the conditions and the weight measurement results for the test groups 41 to 54.

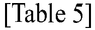

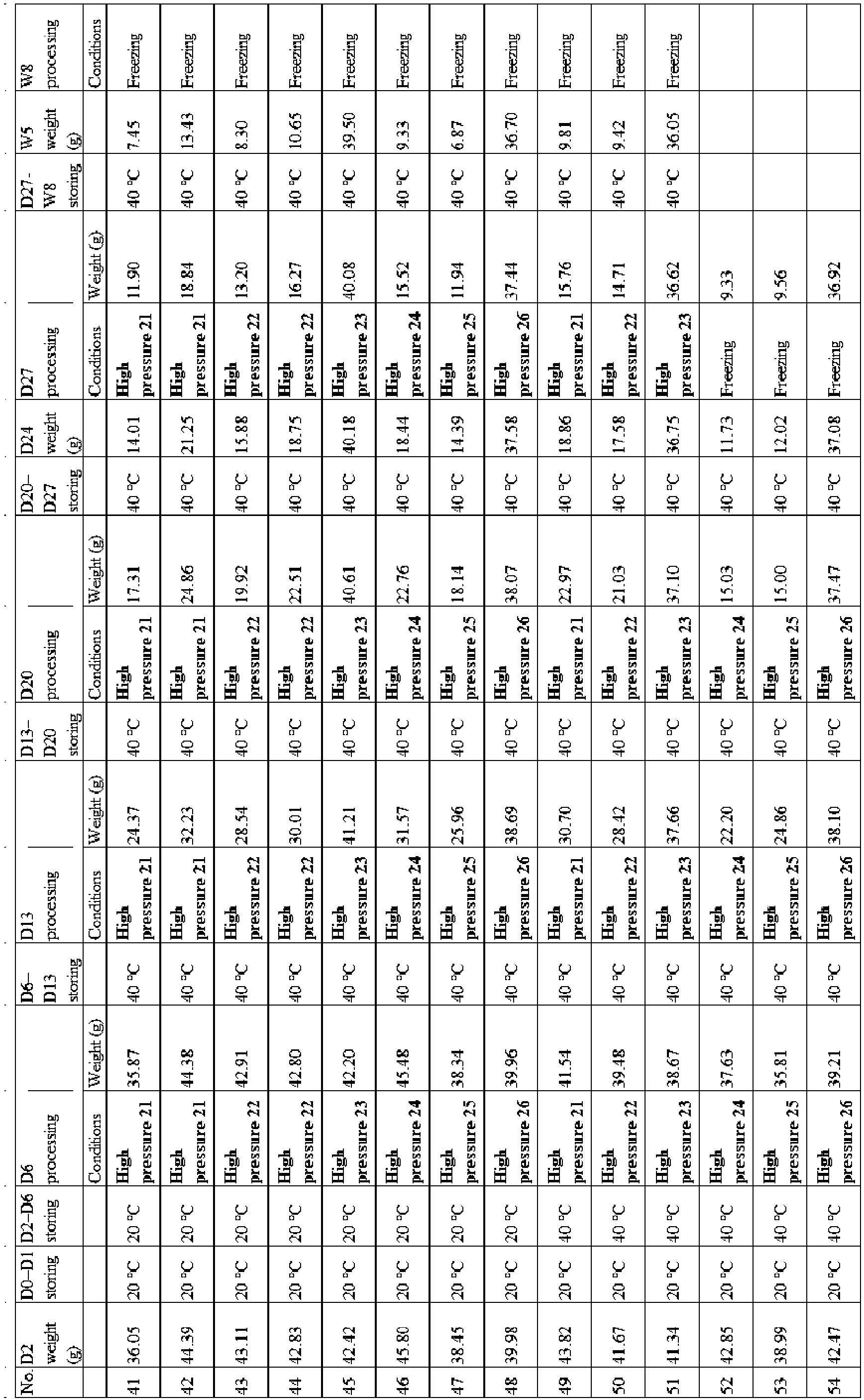

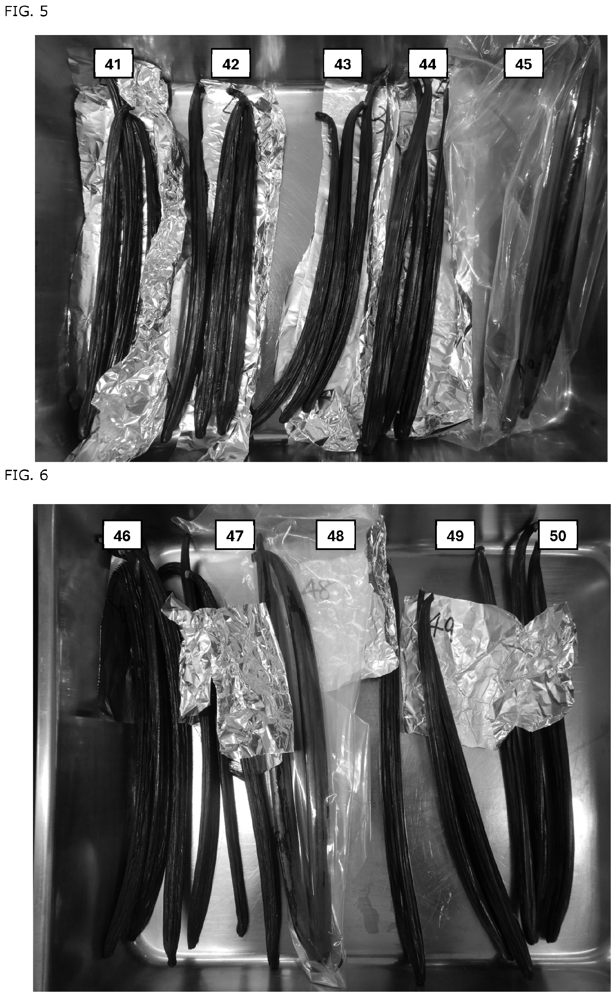

FIG. 5 is a photograph of the vanilla beans in the test groups 41 to 45 immediately before the processing on D20.

FIG. 6 is a photograph of the vanilla beans in the test groups 46 to 50 immediately before the processing on D20.

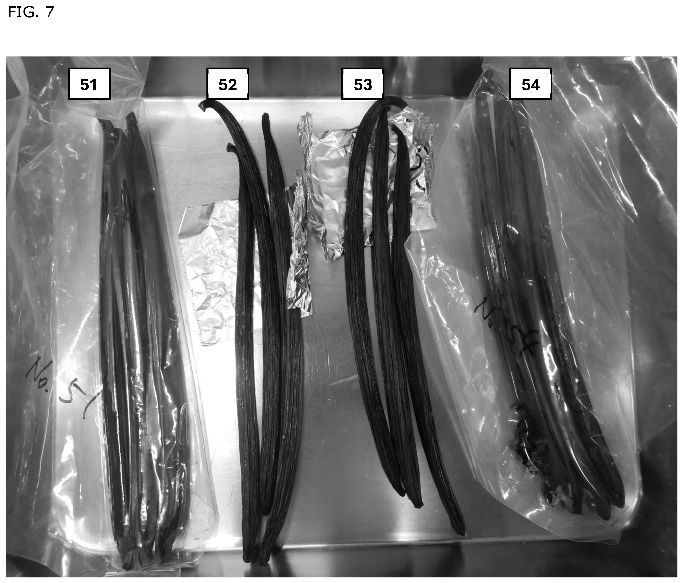

FIG. 7 is a photograph of the vanilla beans in the test groups 51 to 54 immediately before the processing on D20.

The samples in the test groups 41 to 45 (FIG. 5), 46 to 50 (FIG. 6), and 51 to 54 (FIG. 7) that were subjected to two cycles of high-pressure processing before the processing on D20 are still darker than the samples in Experiment 3 shown in FIGs. 1 to 4 that were subjected to one cycle of high-pressure processing, and have no green portions. This revealed that curing is further facilitated by performing multiple cycles of high-pressure processing

The samples (test groups 41, 42, 46, 49, and 52) dried without removing the moisture exuding on the surfaces of the vanilla beans in the high-pressure processing had glossier surfaces and were still darker than the corresponding samples (test groups 43, 44, 47, 50, and 53) dried after removing such moisture.

The samples (test groups 45, 48, 51, and 54) that were stored at 40 °C with the vanilla beans packed in bags during the periods between the multiple cycles of high-pressure processing were not dried (the table above) and not glossy.

The samples in the test groups 41, 42, and 49 subjected to high-pressure processing under the conditions of high pressure 21 (40 °C, 100 MPa, and 90 minutes with the moisture removed before storing) were darker and glossier than the samples in the test groups 46 and 52 subjected to processing of high pressure 24 (40 °C, 100 MPa, and 10 minutes with the moisture removed before storing).

The samples in the test groups 49 to 54 stored at 40 °C before the first cycle of high-pressure processing were darker and glossier than the samples in the test groups 41 to 48 that were stored at 20 °C in the same period and subjected to high-pressure processing under the same conditions.

### <Experiment 5>

### (Preparing Fungal Suspension)

A stock suspension was prepared to include white mold (Fusarium) or blue mold (Penicillium) at a concentration of about of 1 × 10⁸ CFU/mL, and frozen at -80 °C until being used for testing.

A white mold fungal suspension of about 1 × 10³ CFU/mL was prepared through dilution with a phosphate buffer solution.

A blue mold fungal suspension of about 1 × 10³ CFU/mL was prepared through dilution with a phosphate buffer solution.

The white mold fungal suspension and the blue mold fungal suspension were each prepared from the corresponding stock suspension immediately before the initial cycle of high-pressure processing (or culture testing when no high-pressure processing was performed).

### (High-Pressure Processing)

About 30 ml of the fungal suspension was vacuum-packed in a soft bag and subjected to high-pressure processing.

Four conditions below, varying in temperature and duration, were set as conditions for the high-pressure processing. The high-pressure processing apparatus described in Experiment 1 was used for the high-pressure processing. Water was used as a pressure transmitting medium. The temperature of high-pressure processing is the temperature of water as a pressure transmitting medium.
(1) Pressure: 100 MPa, Temperature: 20 °C, Duration: 10 minutes
(2) Pressure: 100 MPa, Temperature: 20 °C, Duration: 90 minutes
(3) Pressure: 100 MPa, Temperature: 40 °C, Duration: 10 minutes
(4) Pressure: 100 MPa, Temperature: 40 °C, Duration: 90 minutes

The fungal suspension was subjected to one, two, or three cycles of high-pressure processing under the same conditions.

When one cycle of high-pressure processing was performed, the fungal suspension after the first cycle of high-pressure processing was immediately used in culture testing described later.

When two cycles of high-pressure processing were performed, the fungal suspension after the first cycle of high-pressure processing was stored at 20 °C and was subjected to, five days after the first cycle of high-pressure processing, the second cycle of high-pressure processing under the same conditions as in the first cycle. The fungal suspension after the second cycle of high-pressure processing was immediately used in the culture testing.

When three cycles of high-pressure processing were performed, the fungal suspension after the first cycle of high-pressure processing was stored at 20 °C and was subjected to, five days after the first cycle of high-pressure processing, the second cycle of high-pressure processing under the same condition as in the first cycle. The fungal suspension after the second cycle of high-pressure processing was stored at 20 °C and was subjected to, five days after the second cycle of high-pressure processing, the third cycle of high-pressure processing under the same conditions as in the first cycle. The fungal suspension after the third cycle of high-pressure processing was immediately used in the culture testing.

For comparison, a fungal suspension subjected to no high-pressure processing (zero cycles of high-pressure processing) was prepared. The fungal suspension was used in the culture testing immediately after being prepared.

### (Culture Testing)

After being subjected to zero to three cycles of high-pressure processing, 0.1 ml of the undiluted fungal suspensions were each smeared on a plate medium that is a malt agar medium (Nissui). Each fungal suspension was diluted 10-fold with a phosphate buffer solution, and 0.1 ml of the diluted fungal suspension was smeared on the plate medium. The plate medium smeared with the fungal suspension was placed in an incubator at 20 °C and incubated statically until 14 days after the smearing. Counting of the fungal load was performed after 7 days and 14 days from the smearing. The fungal load (colony forming unit or CFU) for 1 ml of each undiluted fungal suspension was determined based on the amount of the smeared fungal suspension, the dilution factor, and the counting of the fungal load (CFU).

### (Results)

The table below shows the results.

The high-pressure processing had sterilization effects on white mold and blue mold, and was more effective with a longer duration, a higher temperature, and an increased number of processing cycles.

**[Table 6]**

| White mold of 7 days after smearing | | | | |
|---|---|---|---|---|
| | 40 °C | | 20 °C | |
| | 90 min. | 10 min. | 90 min. | 10 min. |
| 0 cycles | 1.3 × 10³ | | | |
| 1 cycle | <10 | 5.7 × 10² | 4.6 × 10² | 1.4 × 10³ |
| 2 cycles | <10 | <10 | <10 | 1.7 × 10² |
| 3 cycles | <10 | <10 | <10 | <10 |

**[Table 7]**

| White mold of 14 days after smearing | | | | |
|---|---|---|---|---|
| | 40 °C | | 20 °C | |
| | 90 min. | 10 min. | 90 min. | 10 min. |
| 0 cycles | 1.3 × 10³ | | | |
| 1 cycle | <10 | 6.2 × 10² | 4.5 × 10² | 1.4 × 10³ |
| 2 cycles | <10 | <10 | <10 | 1.7 × 10² |
| 3 cycles | <10 | <10 | <10 | <10 |

**[Table 8]**

| Blue mold of 7 days after smearing | | | | |
|---|---|---|---|---|
| | 40 °C | | 20 °C | |
| | 90 min. | 10 min. | 90 min. | 10 min. |
| 0 cycles | 8.6 × 10² | | | |
| 1 cycle | 2.8 × 10² | 6.9 × 10² | 7.4 × 10² | 6.6 × 10² |
| 2 cycles | 1.0 × 10 | 4.1 × 10² | 5.6 × 10² | 3.5 × 10² |
| 3 cycles | <10 | 2.2 × 10² | 3.9 × 10² | 2.2 × 10² |

**[Table 9]**

| Blue mold of 14 days after smearing | | | | |
|---|---|---|---|---|
| | 40 °C | | 20 °C | |
| | 90 min. | 10 min. | 90 min. | 10 min. |
| 0 cycles | 1.0 × 10³ | | | |
| 1 cycle | 2.9 × 10² | 9.0 × 10² | 9.7 × 10² | 8.2 × 10² |
| 2 cycles | 1.0 × 10 | 4.1 × 10² | 5.4 × 10² | 3.5 × 10² |
| 3 cycles | <10 | 2.2 × 10² | 3.8 × 10² | 2.2 × 10² |

### <Experiment 6>

This experiment was performed to investigate the effects of the temperature (7 or 20 °C), the pressure (5 or 30 MPa), and the duration (3 or 30 minutes) of high-pressure processing on fungistatic or sterilization processing for vanilla beans.

After seven days from harvest, vanilla beans vacuum-packed in bags (6 pods/bag) were subjected to, using the apparatus described above in Experiment 1, high-pressure processing under conditions shown in the table below. The temperature is the temperature of water used as a pressure transmitting medium. The used vanilla beans were vanilla beans harvested six months after pollination and vanilla beans harvested nine months after pollination.

After the high-pressure processing, the vanilla beans were removed from the bags, placed on trays, and stored, under open conditions, in an air atmosphere at 40 °C for 12 days (until 19 days after harvest).

**[Table 10]**

| Testing category | Temperature | Pressure | Duration |
|---|---|---|---|
| 61 | 7 °C | 100 MPa | 90 min. |
| 62 | 20 °C | 100 MPa | 90 min. |
| 63 | 40 °C | 5 MPa | 90 min. |
| 64 | 40 °C | 30 MPa | 90 min. |
| 65 | 40 °C | 100 MPa | 3 min. |
| 66 | 40 °C | 100 MPa | 30 min. |

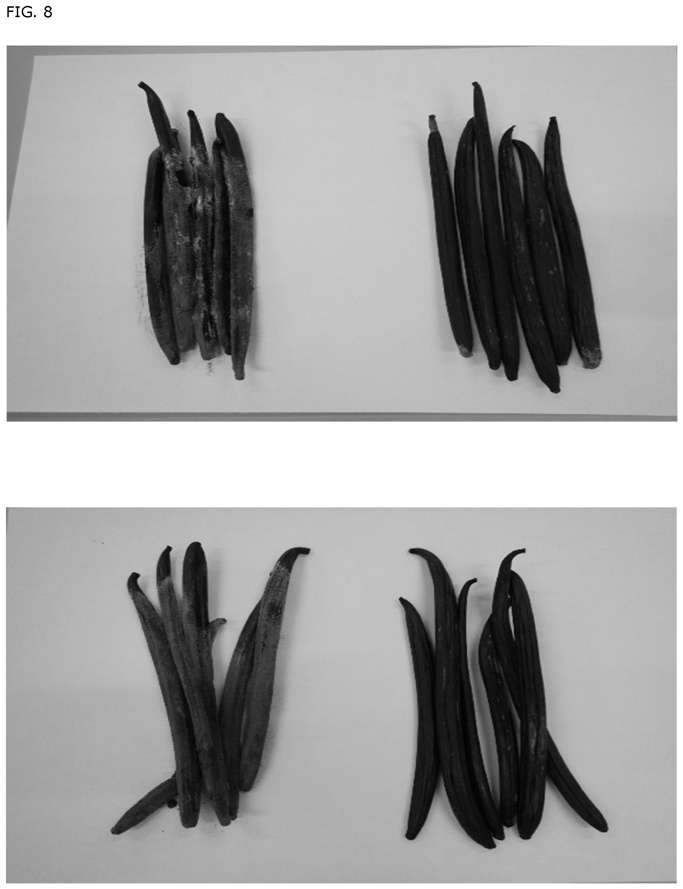

FIGs. 8 to 10 are photographs of the vanilla beans in the respective testing categories after stored at 40 °C for 12 days. In each photograph, the six pods on the left are samples of the vanilla beans harvested six month after pollination and subjected to processing under conditions for the corresponding testing category. The six pods on the right are samples of the vanilla beans harvested nine months after pollination and subjected to processing under conditions for the corresponding testing category.

FIG. 8 is a photograph of the vanilla beans in the testing category 61 (7 °C, 100 MPa, and 90 minutes) in an upper part and the vanilla in the testing category 62 (20 °C, 100 MPa, and 90 minutes) in a lower part. The testing category 61 had noticeable mold growth, whereas the testing category 62 had unnoticeable mold growth. This tendency was noticeable for the samples of the vanilla beans harvested six months after pollination.

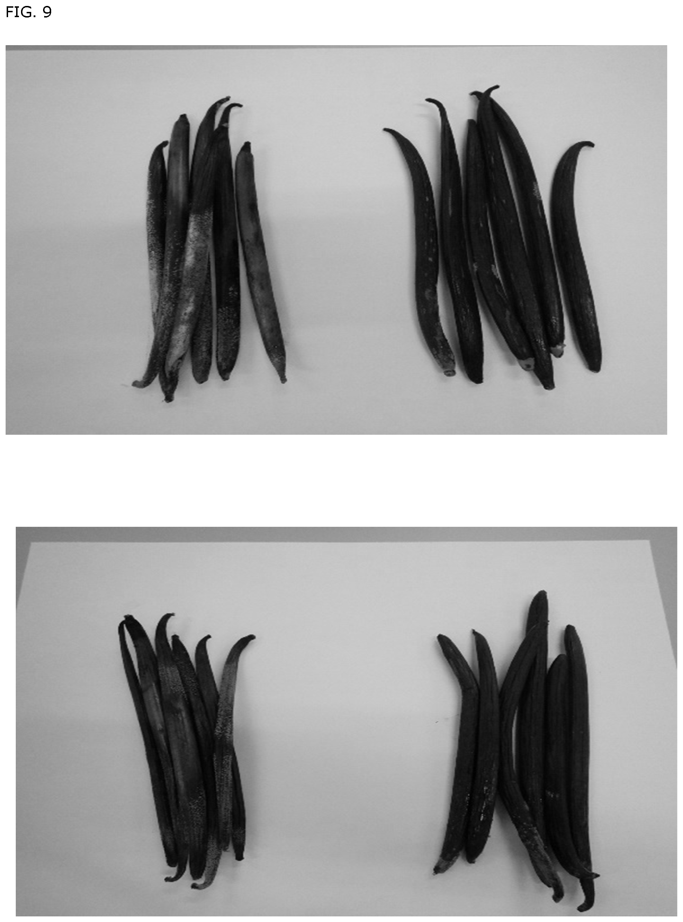

FIG. 9 is a photograph of the vanilla beans in the testing category 63 (40 °C, 5 MPa, and 90 minutes) in an upper part and the vanilla beans in the testing category 64 (40 °C, 30 MPa, and 90 minutes) in a lower part. The testing category 63 had noticeable mold growth, whereas the testing category 64 had unnoticeable mold growth. In the experiments using the vanilla beans harvested six months after pollination, the vanilla beans in the testing category 63 had many green portions and were slower to dry and cure than the vanilla beans in the testing category 64.

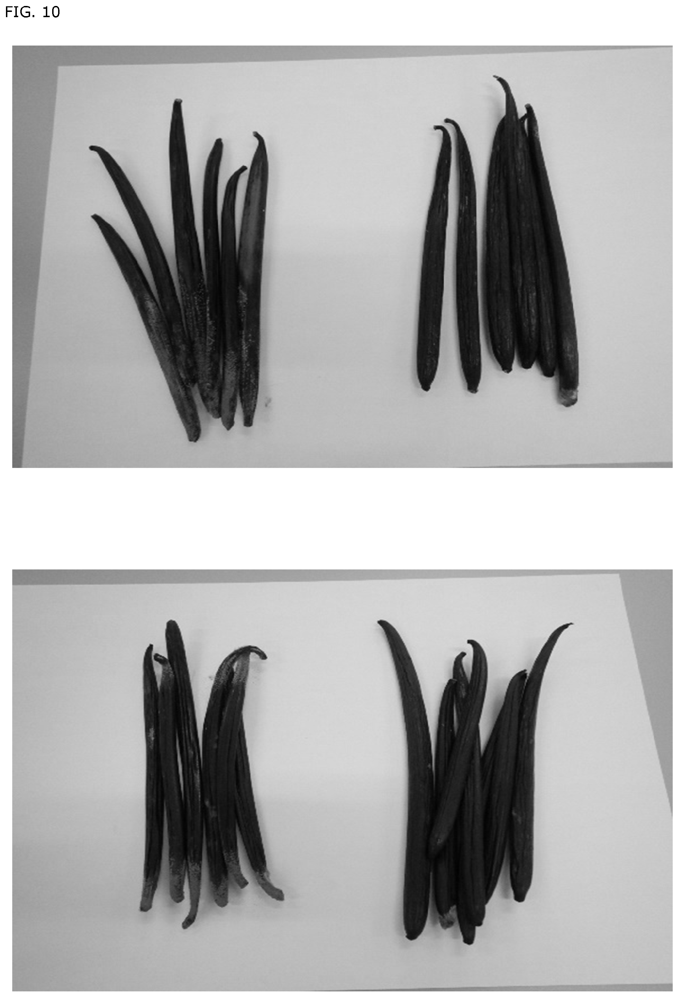

FIG. 10 is a photograph of the vanilla beans in the testing category 65 (40 °C, 100 MPa, and 3 minutes) in an upper part and the vanilla beans in the testing category 66 (40 °C, 100 MPa, and 30 minutes) in a lower part. The testing category 65 had noticeable mold growth, whereas the testing category 66 had unnoticeable mold growth. In the experiments using the vanilla beans harvested six months after pollination, the vanilla beans in the testing category 65 had many green portions and were slower to dry and cure than the vanilla beans in the testing category 66.

## Claims

1. A method for producing cured vanilla beans, the method comprising:
subjecting vanilla beans to high-pressure processing under conditions of a temperature higher than or equal to 15 °C, a pressure higher than or equal to 10 MPa, and a duration longer than or equal to 5 minutes; and
drying, after the high-pressure processing, the vanilla beans subjected to the high-pressure processing.

2. The method according to claim 1, wherein
in the high-pressure processing,
the temperature is higher than or equal to 30 °C,
the pressure is higher than or equal to 50 MPa, and
the duration is longer than or equal to 50 minutes.

3. The method according to claim 1 or claim 2, further comprising:
storing, before the high-pressure processing, the vanilla beans under conditions of a temperature higher than or equal to 20 °C and a duration longer than or equal to 24 hours.

4. The method according to claim 3, wherein
in the storing, the temperature is higher than or equal to 25 °C.

5. The method according to any one of claims 1 to 4, wherein
the drying includes drying the vanilla beans subjected to the high-pressure processing under a condition of a temperature higher than or equal to 30 °C.

6. The method according to any one of claims 1 to 5, wherein
the drying includes drying the vanilla beans subjected to the high-pressure processing without removing moisture exuding on surfaces of the vanilla beans.

7. The method according to any one of claims 1 to 6, wherein
the drying includes, during the drying, at least one cycle of additionally subjecting the vanilla beans to the high-pressure processing and then returning the vanilla beans to the drying.

8. The method according to any one of claims 1 to 7, wherein
the drying is performed until the vanilla beans have a moisture content of 25 to 45% by weight inclusive.

9. A fungistatic or sterilization method for vanilla beans, the method comprising:
subjecting vanilla beans to high-pressure processing under conditions of a temperature higher than or equal to 15 °C, a pressure higher than or equal to 10 MPa, and a duration longer than or equal to 5 minutes; and
drying, after the high-pressure processing, the vanilla beans subjected to the high-pressure processing.

10. The method according to claim 9, wherein
in the high-pressure processing,
the temperature is higher than or equal to 30 °C,
the pressure is higher than or equal to 50 MPa, and
the duration is longer than or equal to 50 minutes.

11. The method according to claim 9 or claim 10, wherein
the drying includes, after the high-pressure processing, drying the vanilla beans subjected to the high-pressure processing under a condition of a temperature higher than or equal to 30 °C.

12. The method according to any one of claims 9 to 11, wherein
the drying includes, during the drying, at least one cycle of additionally subjecting the vanilla beans to the high-pressure processing and then returning the vanilla beans to the drying.
